# EUROPÄISCHE PATENTSCHRIFT

(11) **EP 3 645 238 B1**
(45) Veröffentlichungstag und Bekanntmachung des Hinweises auf die Patenterteilung: **29.03.2023**
(21) Anmeldenummer: 18734514.5
(22) Anmeldetag: 22.06.2018
(51) Int. Cl.: B29C 49/78

(54) **VORRICHTUNG UND VERFAHREN ZUR SCHALTZEITKOMPENSATION AM VENTILBLOCK**
DEVICE AND METHOD FOR SWITCHING TIME COMPENSATION ON THE VALVE BLOCK
DISPOSITIF ET PROCÉDÉ DE COMPENSATION DU TEMPS DE COMMUTATION SUR UN BLOC DE SOUPAPES

(30) Priorität: 26.06.2017 DE 102017114138
(43) Veröffentlichungstag der Anmeldung: 06.05.2020
(73) Patentinhaber: Krones AG, 93073 Neutraubling (DE)
(72) Erfinder: HÜTTNER, Gerald, 93073 Neutraubling (DE); FINGER, Dieter, 93073 Neutraubling (DE)
(74) Vertreter: Bittner, Bernhard
(86) Internationale Anmeldenummer: PCT/EP2018/066704
(87) Internationale Veröffentlichungsnummer: WO 2019/002113

(56) Entgegenhaltungen:
- EP-A1- 2 199 061
- EP-A1- 2 829 379
- WO-A1-2011/023155
- WO-A1-2016/083711
- FR-A1- 3 017 327

## Beschreibung

Die vorliegende Erfindung bezieht sich auf eine Vorrichtung und ein Verfahren zum Umformen von Kunststoffvorformlingen zu Kunststoffbehältnissen mit einer Vielzahl an Blasstationen, die jeweils Blasformeinrichtungen aufweisen, welche einen Hohlraum ausbilden, innerhalb dem die Kunststoffvorformlinge zu Kunststoffbehältnissen umformbar sind. Vorrichtungen und Verfahren zum Umformen von Kunststoffvorformlingen zu Kunststoffbehältnissen sind aus dem Stand der Technik seit langem bekannt. Üblicherweise ist zu jeder Blasstation eine Beaufschlagungseinrichtung vorgesehen, mittels der die Kunststoffvorformlinge zu deren Expansion, mit einem fließfähigen Medium beaufschlagbar sind. Das fließfähige Medium wird dabei aus einem Druckreservoir über einen zwischen dem Druckreservoir und der Beaufschlagungseinrichtung angeordneten Ventilblock zugeführt, über den die Zufuhr des, insbesondere unter hohem Druck stehenden, fließfähigen Mediums gesteuert werden kann. Die Ventile der Ventilblöcke haben die Aufgabe, Drücke von bis zu 40 bar zu schalten. Außerdem sind zum Zweck einer möglichst hohen Stationsleistung sehr hohe Volumenströme zu realisieren. Die Ventilkolben haben deshalb einen sehr großen Durchmesser und müssen deshalb zum Öffnen bzw. Schließen sehr hohe Kräfte aufbringen. Eine reine elektrische Betätigung ist nicht möglich, da die Schaltströme für die Digitalausgangsmodule zu groß wären. Stattdessen werden Pilotventile zur pneumatischen Vorsteuerung eingesetzt.

Die Druckschrift WO 2011/023155 offenbart eine Vorrichtung und Verfahren zum Umformen von Kunststoffvorformlingen zu Kunststoffbehältnissen mit einer Vielzahl an Blasstationen, die jeweils Blasformeinrichtungen aufweisen, welche einen Hohlraum ausbilden, innerhalb dem die Kunststoffvorformlinge zu Kunststoffbehältnissen umformbar sind, mit wenigstens einer Beaufschlagungseinrichtung, mittels der die Kunststoffvorformlinge zu deren Expansion, mit einem fließfähigem Medium beaufschlagbar sind, und mit wenigstens einer Ventileinrichtung, welche zwischen wenigstens einem Druckreservoir und wenigstens einer Beaufschlagungseinrichtung angeordnet ist und über welche die Zufuhr und/oder Abfuhr des unter hohem Druck stehenden, fließfähigen Mediums, dessen Blasdruck und/oder Volumenstrom, an die Beaufschlagungseinrichtung beeinflussbar bzw. steuerbar ist, wobei die Vorrichtung wenigstens eine Regelungseinrichtung aufweist, welche dazu geeignet und bestimmt ist, einen Öffnungszustand und/oder einen Schließzustand der Ventileinrichtung, zu einem vorgegebenen Behandlungszeitpunkt der Kunststoffbehältnisse zu regeln.

Aus den Vorrichtungen und Verfahren, die derzeit aus dem Stand der Technik bekannt sind, ergibt sich der Nachteil, dass bei Pneumatikventilen keine konstante und gleichbleibende Schaltzeit sichergestellt werden kann, da sie einer gewissen Streuung unterliegen. Durch die Reihenschaltung von Pilotventil und Hochdruckventil ergibt sich sogar eine noch größere Streuung. Auch zwischen den unterschiedlichen Stationen muss mit einer Streuung gerechnet werden. All diese Faktoren mindern die gleichbleibende Qualität der Flaschen.

Der vorliegenden Erfindung liegt die Aufgabe zugrunde, die aus dem Stand der Technik bekannten Nachteile zu überwinden und die Vorrichtung dahingehend zu verbessern, einen vorgegebenen Schaltzustand der Ventile möglichst exakt zu einem vorgegebenen Prozesszeitpunkt zu erreichen, d.h. vorgenannte Streuung der Erreichung eines vorgegebenen Schaltzustands des Ventils bzw. der Ventile möglichst weitgehend zu minimieren.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Vorrichtung zum Umformen von Kunststoffvorformlingen zu Kunststoffbehältnissen ist im Anspruch 1 offenbart.

Unter hohem Druck wird dabei bevorzugt ein Druck größer als 10 bar, bevorzugt größer als 20 bar, bevorzugt größer als 30 bar, bevorzugt größer als 35 bar und besonders bevorzugt bis zu 40 bar verstanden. Bevorzugt handelt es sich dabei bei der Ventileinrichtung um ein Hochdruckventil. Bei dem fließfähigen Medium handelt es sich insbesondere um ein gasförmiges Medium, es wäre jedoch auch die Verwendung eines flüssigen Mediums denkbar.

Erfindungsgemäß weist die Vorrichtung wenigstens eine Regelungseinrichtung auf, welche dazu geeignet und bestimmt ist, einen Zustand der Ventileinrichtung, insbesondere einen Öffnungszustand und/oder einen Schließzustand der Ventileinrichtung, bzw. die Vornahme einer Zustandsänderung der Ventileinrichtung bevorzugt zu (wenigstens) einem vorgegebenen Behandlungszeitpunkt der Kunststoffbehältnisse (Kunststoffvorformlinge oder Kunststoffbehältnisse) und/oder einem vorgegebenen Prozesswinkel der Blasstation zu regeln.

Bevorzugt wird die Regelung individualisiert für wenigstens eine Blasstation, vorteilhaft für jede Ventileinrichtung der Blasstation, und besonders bevorzugt eine individuelle Regelung für jede Blasstation, insbesondere jede Ventileinrichtung individualisiert/einzeln, vorgenommen. Dies bietet den Vorteil, dass damit, etwa eine Temperaturabhängigkeit einer Ventileinrichtung, welche sich erfahrungsgemäß auch bei baugleichen Ventileinrichtungen anders bzw. unterschiedlich stark auswirkt, je nach Bedarf individuell für jede einzelne Ventileinrichtung kompensiert werden kann.

Vorteilhaft werden die Behältnisse, bzw. die Kunststoffvorformlinge, entlang eines kreisförmigen Pfades transportiert, wobei beispielsweise eine Vielzahl von Blasstationen an einem Blasrad angeordnet sein kann. Unter dem Behandlungszeitpunkt bzw. Prozesszeitpunkt wird damit vorteilhaft ein Zeitpunkt verstanden, der einer bestimmten Blasstation bzw. einem bestimmten Kunststoffvorformling zugeordnet ist. Dabei kann dieser Zeitpunkt auch als Zeitdifferenz des aktuellen/derzeitigen Zeitpunktes und dem Zeitpunkt, an dem die Blasstation bzw. der Kunststoffvorformlinge an einem vorgegebenen Ort war, angegeben sein bzw. gemessen werden. Als vorgegebener Ort eignet sich etwa eine bestimmte Position der Blasstation bzw. des Kunststoffvorformlings auf dem Transportpfad, etwa diejenige Position der Blasstation, an der die Kunststoffvorformlinge an diese übergeben werden. Im Falle eines kreisförmigen Transportpfades wird oftmals einer bestimmten Position einer Blasstation auf dieser Kreislinie ein sogenannter Prozesswinkel zugeordnet, der dann alternativ zum Behandlungszeitpunkt der Kunststoffbehältnisse angegeben werden kann (bei bevorzugt festgelegter, besonders bevorzugt konstanter, Transportgeschwindigkeit bzw. Drehgeschwindigkeit der Blasstation).

Mit anderen Worten wird der Vorrichtung bevorzugt für (wenigstens) einen (fest) vorgegebenen Behandlungszeitpunkt bzw. einem (festen) Prozesswinkel ein Sollzustand der Ventileinrichtung vorgegeben, den diese zu diesem Behandlungszeitpunkt bzw. zu diesem Prozesswinkel einnehmen soll. Dabei kann es sich etwa um einen Öffnungszustand der Ventileinrichtung, in der der durch diese Ventileinrichtung gesteuerte Strömungsquerschnitt des fließfähigen Mediums maximal ist, oder um einen Schließzustand der Ventileinrichtung, in der der Strömungsquerschnitt vollständig verschlossen ist, oder aber um einen Zustand der Ventileinrichtung handeln, in der der der durch diese Ventileinrichtung gesteuerte Strömungsquerschnitt lediglich eingeschränkt, nicht aber vollständig verschlossen ist. Bevorzugt ist es ausreichend bzw. vorteilhaft, dass lediglich ein (vollständiger) Öffnungszustand und ein (vollständiger) Schließzustand vorgesehen sind. Eine Regelung findet dabei bevorzugt durch Vergleich des Istzustands mit dem Sollzustand der Ventileinrichtung zu dem vorgegebenen Behandlungszeitpunkt bzw. dem vorgegebenen Prozesswinkel und einer Anpassung der für den Zustand der Ventileinrichtung charakteristischen Parameter statt. Die Regelung kann aber auch derart erfolgen, dass der (Behandlungs-)Zeitpunkt bzw. der Prozesswinkel erfasst wird, an dem die Ventileinrichtung den vorgegebenen Sollzustand erreicht bzw. eingenommen hat, und dieser erfasste (Behandlungs-)Zeitpunkt bzw. Prozesswinkel mit dem vorgegebenen Behandlungszeitpunkt bzw. Prozesswinkel verglichen wird und bevorzugt in Abhängigkeit dieses Vergleichs eine Anpassung bzw. Änderung der für den Zustand der Ventileinrichtung charakteristischen Parameter vorgenommen wird.

Dabei erfolgt eine Anpassung bzw. Änderung der für den Zustand der Ventileinrichtung charakteristischen Parameter derart, dass sich diese (erst) in einem nachfolgenden Behandlungszyklus bzw. Transportzyklus bzw. (Behandlungs-)runde auswirken. Unter Behandlungszyklus bzw. Transportzyklus bzw. Behandlungsrunde wird dabei bevorzugt ein einmaliger vollständiger Durchlauf einer Blasstation entlang des Transportpfades verstanden, d.h. bis die Blasstation wieder an einer Ausgangsposition des Transportpfades angelangt ist, an der beispielsweise ein nächster Kunststoffvorformling der Blasstation zugeführt wird, dieser zu einem Kunststoffbehältnis expandiert wird, und dieses schließlich an eine weitere Transporteinrichtung übergeben wird.

Bevorzugt findet eine derartige Regelung über mehrere Behandlungszyklen statt, bevorzugt wird eine derartige Regelung in jedem Behandlungszyklus durchgeführt. Bevorzugt nähert sich der Istzustand der Ventileinrichtung zu einem vorgegebenen Behandlungszeitpunkt in (jedem) einem nachfolgenden Behandlungszyklus (immer) näher dem Sollzustand der Ventileinrichtung an. Bevorzugt nähert sich der (Ist-)Zeitpunkt bzw. (Ist-)Prozesswinkel, an dem die Ventileinrichtung einen (fest) vorgegebenen (Soll-)Zustand erreicht bzw. angenommen hat, in (jedem) einem nachfolgenden Behandlungszyklus (immer) näher dem (fest) vorgegebenen (Soll-)Zeitpunkt bzw. (Soll-)Prozesswinkel an.

Eine derartige Regelung (welche über mehrere Behandlungszyklen erfolgt) bietet den Vorteil, dass die zur Verfügung stehende (etwa durch die Dauer einer kompletten Drehung des Blasrades vorgegebene) Prozesszeit besser ausgenutzt werden kann. Durch eine Schmälerung der (zeitlichen) Varianz, zu welchem Zeitpunkt ein vorgegebener Sollzustand der Ventileinrichtung der Blasstation erreicht bzw. realisiert wird und der dann wiederum den Zeitpunkt bzw. den Prozesswinkel bestimmt, ab wann ein bestimmter Behandlungsvorgang eingeleitet wird (etwa die Beaufschlagung eines Kunststoffvorformlings mit einem vorgegebenen Druckniveau), muss ein lediglich kleineres Toleranzzeitfenster für die Initiierung dieses Behandlungsvorganges eingeplant werden. Hierdurch kann eine gleichbleibend höhere Flaschenqualität erreicht werden. Gleichzeitig vergrößert sich auch das Prozessfenster, wodurch bei anderen prozessbeeinflussenden Parametern größere Streuungen möglich sind. Auch kann gegebenenfalls etwa eine längere Prozesszeit für einen weiteren Behandlungsvorgang verwendet werden.

Bei der Beaufschlagungseinrichtung kann es sich beispielsweise um eine Blasdüse handeln, welche vor der Expansion bevorzugt an eine Mündung der Kunststoffvorformlinge angelegt wird.

In einer vorteilhaften Ausführungsform weist die Vorrichtung wenigstens eine, bevorzugt pneumatisch, arbeitende Vorsteuerungseinrichtung (bevorzugt ein Pneumatikventil) auf, welche dazu geeignet und bestimmt ist, die Ventileinrichtung anzusteuern, und die Regelungseinrichtung bevorzugt ausschließlich mittels einer Ansteuerung der Vorsteuerungseinrichtung eine Regelung der Ventileinrichtung realisiert/vornimmt. Bevorzugt handelt es sich bei der Vorsteuerungseinrichtung zumindest nicht ausschließlich um eine elektrische und/oder elektronische Einrichtung. Bevorzugt kann es sich bei der Vorsteuerungseinrichtung um eine weitere Ventileinrichtung, etwa um ein Pilotventil, handeln. Bevorzugt wird also die Ventileinrichtung (auch) ausschließlich über eine Ansteuerung der Vorsteuerungseinrichtung angesteuert, was insofern vorteilhaft sein kann, wie eingangs erwähnt, als durch die Ansteuerung der Ventileinrichtung über eine pneumatisch arbeitende Vorsteuerungseinrichtung, etwa über ein sogenanntes Pilotventil, sowohl hohe Drücke, etwa bis zu 40 bar, als auch sehr hohe Volumenströme durch die Ventileinrichtung geschaltet bzw. gesteuert werden können. Hierfür sind derart große Ventilkolbendurchmesser erforderlich, dass diese nicht elektrisch betätigt werden können. Im Gegensatz zu einer elektrisch angesteuerten Ventileinrichtung kann allerdings nachteilig durch die pneumatische Arbeitsweise der Ansteuerung eine (zusätzliche) die Schaltung der Ventileinrichtung verzögernde "Reaktionszeit" bzw. Auslösezeit von dem Zeitpunkt des elektrischen Schaltsignals zur Schaltung der Vorsteuerungseinrichtung bis zum Erreichen des gewünschten Zustands der Ventileinrichtung eintreten. Bevorzugt wird durch die von der Regelungseinrichtung vorgenommene Regelung eine derartige Reaktionszeit bzw. Auslösezeit kompensiert.

In einer weiteren vorteilhaften Ausführungsform weist die Ventileinrichtung wenigstens ein Ventil auf, welches einen in einem Zylinder geführten Ventilkolben aufweist, von dessen Position der Blasdruck und/oder der Volumenstrom des fließfähigen Mediums wenigstens zeitweise abhängt.

Bevorzugt wird als Stellgröße für die (durch die Regelungseinrichtung vorgenommene) Regelung ein charakteristischer Parameter, wie etwa eine Kolbenposition, der Vorsteuerungseinrichtung verwendet. Denkbar ist aber auch als Stellgröße ein elektrisches Schaltsignal zu verwenden, welches bevorzugt zur Initiierung einer Änderung einer Kolbenposition der Vorsteuerungseinrichtung dienen kann. Die Vorsteuerungseinrichtung kann dabei bevorzugt über einen Schrittmotor angesteuert werden, welche besonders bevorzugt wiederum mittels eines elektrischen Schaltsignals gesteuert wird. Eine Änderung der Stellgröße beeinflusst dann bevorzugt die Regelgröße, bevorzugt direkt oder indirekt, welche etwa als Ist-Position eines Ventilkolbens der Ventileinrichtung oder aber als Ist-Behandlungszeitpunkt bzw. Ist-Prozesswinkel, zu dem die Ventileinrichtung einen bestimmten/vorgegebenen Zustand, etwa eine bestimmte/vorgegebene Kolbenposition erreicht hat, gewählt werden kann.

In einer weiteren vorteilhaften Ausführungsform ist die pneumatisch arbeitende Vorsteuerungseinrichtung dazu geeignet und bestimmt, zumindest mittelbar und bevorzugt unmittelbar die über die Ventileinrichtung bewirkte Steuerung der Zufuhr und/oder Abfuhr des fließfähigen Mediums zu beeinflussen. Die Vorsteuerungseinrichtung ist bevorzugt dazu geeignet und bestimmt, die Kolbenposition der Ventileinrichtung zu variieren, etwa durch Beaufschlagung einer Kolbenfläche des Kolbens der Ventileinrichtung.

Erfindungsmäßig weist die Regelungseinrichtung wenigstens eine Sensoreinrichtung auf, welche wenigstens zeitweise wenigstens einen Messwert erfasst, der zumindest mittelbar für eine momentane von der Ventileinrichtung bewirkte Steuerung der Zufuhr und/oder Abfuhr des fließfähigen Mediums, insbesondere für einen Zustand der Ventileinrichtung, charakteristisch ist, und die Regelungseinrichtung eine Regelung in Abhängigkeit dieses erfassten Messwertes vornimmt/bewirkt.

In einer weiteren vorteilhaften Ausführungsform erfasst die Sensoreinrichtung wenigstens zeitweise die Position des Ventilkolbens innerhalb des Zylinders und die Regelungseinrichtung nimmt die Regelung der Ventileinrichtung in Abhängigkeit dieser Position vor.

In einer weiteren vorteilhaften Ausführungsform ist die Sensoreinrichtung aus einer Gruppe ausgewählt, die Mikroschalter, induktive Näherungsschalter, andere elektronische oder elektromechanische Bauteile oder Kombinationen hieraus umfasst.

Erfindungsmäßig weist die Vorrichtung wenigstens eine Zeitmesseinrichtung auf, welche wenigstens zeitweise wenigstens einen Zeitpunkt, zu dem die Ventileinrichtung einen vorgegebenen Zustand, insbesondere einen vorgegebenen Öffnungs- und/oder Schließzustand, erreicht, erfasst. Bevorzugt weist die Vorrichtung zumindest für jede Blasstation wenigstens eine Zeitmesseinrichtung auf, welche wenigstens zeitweise einen Zeitpunkt, zu dem die Ventileinrichtung einen vorgegebenen Zustand erreicht, erfasst.

In einer weiteren vorteilhaften Ausführungsform erfasst die Zeitmesseinrichtung, bevorzugt erfassen jeweils die Zeitmesseinrichtungen, wenigstens zeitweise einen Zeitpunkt, an dem der von der Sensoreinrichtung erfasste Messwert einen vorgegebenen Messwert erreicht und/oder überschreitet. Denkbar ist auch, dass der Zeitpunkt eines Unterschreitens eines vorgegebenen Messwertes erfasst wird. Bevorzugt erfasst die Zeitmesseinrichtung einen Zeitpunkt, an dem der Ventilkolben der Ventileinrichtung eine vorgegebene Position erreicht hat.

In einer weiteren vorteilhaften Ausführungsform weist die Vorrichtung eine Auswerteeinrichtung auf, die wenigstens den von der Zeitmesseinrichtung erfassten Zeitpunkt mit einem vorgegebenen Zeitpunkt vergleicht und in Abhängigkeit dieses Vergleichsergebnisses eine Änderung der Ansteuerung der Ventileinrichtung und insbesondere eine Änderung der Ansteuerung der Vorsteuerungseinrichtung, bevorzugt eine Änderung des Schaltzeitpunktes der Ventileinrichtung besonders bevorzugt in einem nachfolgenden Behandlungszyklus der Blasstation vornimmt. Bevorzugt wird daher dieser Zeitpunkt als Regelgröße innerhalb der Regelung verwendet. Unter einem nachfolgenden Behandlungszyklus der Blasstation wird dabei verstanden, dass sich diese Änderungen des Schaltzeitpunktes erst bei dem Expansionsvorgang eines nachfolgenden, bevorzugt eines nächstfolgenden, Kunststoffvorformlings, der im Anschluss an den Kunststoffvorformling, der sich zum Zeitpunkt der Messungen in der Blasstation befindet, auswirken bzw. vorgenommen werden. Bevorzugt wird die Änderung des Schaltzeitpunktes der Ventileinrichtung in dem direkt nachfolgenden, also nächsten, Behandlungszyklus vorgenommen. Denkbar ist aber auch, dass die Änderungen erst in einem übernächsten oder in einem weiter, etwa dem dritten, vierten, fünften, sechsten, oder mehr als sechsten, nachfolgenden Behandlungszyklus vorgenommen werden.

Bevorzugt werden bei jeder Blasstation die Zeiten von den elektrischen Schaltsignalen bis zur Betätigung des zugehörigen Sensors, beispielsweise eines Näherungssensors, gemessen. In der nächsten Runde werden die gemessenen Zeiten als Vorhalt eingerechnet, d.h. das Ansteuerungssignal wird um die gemessene Zeit früher ausgegeben als der gewünschte Sollzeitpunkt: Der Schaltzeitpunkt des Ventils bzw. der Ventileinrichtung berechnet sich daher in der nachfolgenden Runde (in dem nachfolgenden Behandlungszyklus) als Sollzeitpunkt abzüglich dem gemessenen Vorhalt. Gleichzeitig werden bevorzugt auch wieder neue Messungen durchgeführt, die dann wiederum bevorzugt für die nächste Runde gelten usw. Damit kann vorteilhaft auch ein langsames Wegdriften, das beispielsweise durch das Einlaufen zustande kommt, kompensiert werden.

Bevorzugt bestimmt daher die Auswerteeinrichtung in jedem Behandlungszyklus einen gemessenen Vorhalt bzw. eine gemessen Schaltzeit der Ventileinrichtung, der bzw. die sich aus der Differenz zwischen dem (vorgegebenen bzw. erwünschten) Soll-Schaltungszeitpunkt der Ventileinrichtung und der über die Zeitmesseinrichtung ermittelte tatsächliche Ist-Schaltzeitpunkt ergibt. In einem nachfolgenden Behandlungszyklus, bevorzugt in dem nächstfolgenden Behandlungszyklus, wird bevorzugt durch die Regelungseinrichtung der Schaltzeitpunkt (zu genau diesem Schaltvorgang der Ventileinrichtung) um den Betrag dieser gemessenen Schaltzeit früher oder später eingeleitet (je nachdem ob die Differenz positiv oder negativ war). Bevorzugt hängt damit die Schaltzeit einer Ventileinrichtung von (wenigstens) einem von der Zeitmesseinrichtung in einem vorhergehenden (bevorzugt direkt vorangegangenen) Behandlungszyklus erfassten Zeitpunkt und/oder von wenigstens einem in einem vorhergehenden (bevorzugt direkt vorangegangenen) Behandlungszyklus von der Sensoreinrichtung erfassten Messwert zu genau der Ventileinrichtung und genau derselben Blasstation ab.

Bevorzugt veranlasst die Regelungseinrichtung, dass zu einer (bevorzugt zu mindestens einer und besonders bevorzugt zu jeder) vorgegebenen Ventileinrichtung einer vorgegebenen Blasstation die Sensoreinrichtung in jedem Behandlungszyklus dieser Blasstation mindestens zu einem Schaltvorgang der Ventileinrichtung einen Messwert erfasst, der für eine Position des Ventilkolbens der Ventileinrichtung charakteristisch ist, und bevorzugt die Zeitmesseinrichtung mindestens zu einem Schaltvorgang der Ventileinrichtung einen Zeitpunkt erfasst, an dem der von der Sensoreinrichtung erfasste Messwert im Wesentlichen einen vorgegebenen (Soll-)Messwert erreicht und/oder überschreitet. Bevorzugt veranlasst die Regelungseinrichtung eine derartige Messung der Sensoreinrichtung bzw. der Zeitmesseinrichtung zu jedem Schaltvorgang der Ventileinrichtung. Bevorzugt führt daher die Regelungseinrichtung die Regelung mindestens eines (vorteilhaft genau eines) Schaltvorganges bzw. die Regelung mindestens einer Änderung eines Schaltzustandes der Ventileinrichtung durch. Besonders bevorzugt führt die Regelungseinrichtung die Regelung von mindestens zwei (vorteilhaft genau zwei) Schaltvorgängen bzw. die Änderungen eines Schaltzustandes der Ventileinrichtung, nämlich bevorzugt einem Öffnen der Ventileinrichtung und einem Schließen der Ventileinrichtung, besonders bevorzugt in dieser Reihenfolge, durch. Dabei können diese (beiden) Regelungen zu innerhalb eines Behandlungszyklus unabhängigen Schaltvorgängen der Ventileinrichtung unabhängig voneinander erfolgen. Mit anderen Worten kann für jede dieser Regelungen eine andere Regelgröße bzw. Stellgröße (innerhalb desselben Behandlungszyklus) verwendet werden.

Bevorzugt erfolgt in einem nachfolgenden, besonders bevorzugt in dem nächstfolgenden Behandlungszyklus, erst eine Abänderung eines Schaltzeitpunktes des (derzeitigen) Behandlungszyklus, sofern die Regelgröße bzw. die gemessene Schaltzeit außerhalb eines Toleranzbereiches liegt. Vorstellbar wäre etwa, dass keine Abänderung des Schaltzeitpunktes erfolgt, sofern der Zeitpunkt der tatsächlichen Erreichung der erwünschten Zustandsänderung der Ventileinrichtung (der vorgegebenen Position des Ventilkolbens) um weniger als 10 ms, bevorzugt 5 ms, bevorzugt 3 ms und besonders bevorzugt weniger als 1 ms von dem Soll-Schaltzeitpunkt abweicht.

In einer weiteren vorteilhaften Ausführungsform weist die Vorrichtung mehr als eine Ventileinrichtung und bevorzugt eine Vielzahl von Ventileinrichtungen auf, mittels welchen bevorzugt die Druckzufuhr zu der Beaufschlagungseinrichtung insbesondere unter verschiedenen Druckniveaus steuerbar ist, und jeder Ventileinrichtung ist jeweils eine separate Regelungseinrichtung zugeordnet. Zu diesem Zweck kann jede einzelne Blasstation der Vorrichtung einen Ventilblock aufweisen, der wiederum diese Vielzahl von Ventilen aufweist. Dabei weist bevorzugt jede Ventileinrichtung auch eine eigene Vorsteuerungseinrichtung auf. Bevorzugt weist wenigstens eine Blasstation und besonders bevorzugt weisen alle Blasstationen wenigstens zwei Ventileinrichtungen auf, die eine Beaufschlagung der Kunststoffbehältnisse bzw. der Kunststoffvorformlinge mit voneinander verschiedenen Druckniveaus ermöglichen.

In einer weiteren vorteilhaften Ausführungsform weist die Ventileinrichtung wenigstens ein Entlastungsventil auf, über welches die Blasstation und bevorzugt dessen Blasformeinrichtung zumindest teilweise druckentlastbar ist. Auch für dieses Entlastungsventil kann eine bevorzugt obig beschriebene Regelungseinrichtung vorgesehen sein, die insbesondere einen Schaltzeitpunkt der Ventileinrichtung regelt. Bevorzugt ist wenigstens ein Anteil des fließfähigen Mediums von den Kunststoffbehältnissen in wenigstens ein Druckreservoir über das Entlastungsventil rückführbar bzw. wird, bevorzugt über das Entlastungsventil, zurückgeführt. Bei einer weiteren vorteilhaften Ausführungsform kann die Vorrichtung insbesondere je Blasstation auch Auslässe aufweisen, über welche Druckluft an die Umgebung ausgelassen werden kann. Im Bereich dieses Auslasses kann dabei zusätzlich auch ein Schalldämpfer vorgesehen sein.

Bevorzugt weist die Vorrichtung bzw. die Blasstation und bevorzugt jede Blasstation ein Vorblasventil auf, welches ein fließfähiges Medium, welches bevorzugt aus einem ersten Druckreservoir zur Verfügung gestellt wird, zum Vorblasen des Kunststoffvorformlings mit einem ersten Druck steuert. Weiter ist bevorzugt ein Zwischendruckventil vorgesehen, welches bevorzugt den Fluss fließfähigen Mediums, bevorzugt aus einem zweiten Druckreservoir, welches das fließfähige Medium mit einem Zwischendruck zur Verfügung stellt, zum Zwischenblasen des Kunststoffvorformlings mit diesem zweiten Zwischendruck steuert. Dabei ist bevorzugt der Zwischendruck höher als der erste Druck und kann zudem variieren. Weiter ist bevorzugt ein drittes Ventil, bevorzugt ein Fertigblasventil, vorgesehen, welches die Beaufschlagung des Kunststoffvorformlings mit fließfähigen Mediums eines dritten Drucks, der wiederum höher als der zweite Druck ist, zum Fertigblasen dieses Kunststoffvorformlings steuert. Dieses pneumatische Medium des dritten Drucks wird bevorzugt von einem dritten Druckreservoir zur Verfügung gestellt. Es können alle Ventile, das Vorblasventil, das Zwischendruckventil, das Fertigblasventil sowie das Entlastungsventil, eine erfindungsgemäße Regelungseinrichtung, aber auch nur einzelne dieser Ventile oder einzelne Kombinationen hieraus eine Regelungseinrichtung aufweisen. Denkbar ist auch, dass wenigstens und bevorzugt lediglich für das Vorblasventil eine Regelungseinrichtung vorgesehen ist. Es hat sich nämlich gezeigt, dass insbesondere das Vorblasen einen großen Einfluss auf die Behältnisqualität hat, während der Zwischenblasdruck bevorzugt überwiegend dazu dient, den Luftverbrauch zu senken.

Vorteilhaft ist wenigstens ein Druckreservoir bzw. ein Reservoir für das fließfähige Medium als Ringleitung ausgeführt, welche eine Vielzahl von Blasstationen bzw. Umformungsstationen mit Druckluft versorgt. Vorteilhaft weisen dabei diese einzelnen Umformungsstationen jeweils eine Blasform auf, daneben bevorzugt jedoch auch noch andere Bestandteile, wie beispielsweise Blasformhalter, die zum Öffnen und Schließen auseinander- bzw. zusammengeklappt werden können. Daneben weisen diese Umformungsstationen bevorzugt auch noch jeweils Reckstangen zum Dehnen der Kunststoffvorformlinge auf. Vorteilhaft ist die Vorrichtung wenigstens abschnittsweise innerhalb eines Reinraums angeordnet. Vorteilhaft umgibt der Reinraum den Transportpfad der Behältnisse (zumindest abschnittsweise und bevorzugt zumindest in dem Bereich, in dem das Blasrad angeordnet ist) kanalartig. Weiterhin ist dieser Reinraum mittels wenigstens einer Wandung gegenüber einer unsterilen Umgebung abgegrenzt.

In einer weiteren vorteilhaften Ausführungsform ist die Auswerteeinrichtung dazu geeignet und bestimmt, zumindest zeitweise in Abhängigkeit des von der Sensoreinrichtung erfassten Messwertes und/oder des von der Zeitmesseinrichtung erfassten Zeitpunktes einen Alterungszustand wenigstens eines Ventils der Ventileinrichtung zu ermitteln. Bevorzugt kann basierend auf den ermittelten Alterungszustand abgeleitet werden, ob das Ventil ausgetauscht werden muss (etwa wenn Schaltzeiten zu lange werden). Bevorzugt kann daher in Abhängigkeit von dem erfassten Messwert insbesondere durch die Auswerteeinrichtung ein Signal an einen Bediener ausgegeben werden, welches angibt, ob ein Ventil bzw. eine Ventileinrichtung ausgetauscht werden soll.

Die vorliegende Erfindung ist weiterhin auf ein Verfahren gemäß Anspruch 12 gerichtet.

Erfindungsgemäß wird eine Regelung eines Zustands der Ventileinrichtung, insbesondere eines Öffnungszustandes und/oder einen Schließzustandes der Ventileinrichtung, bzw. einer Vornahme einer Zustandsänderung der Ventileinrichtung zu einem vorgegebenen Behandlungszeitpunkt der Kunststoffbehältnisse vorgenommen bzw. erfolgt. Dabei kann das Verfahren mit allen bereits im Zusammenhang mit der Vorrichtung beschriebenen Merkmalen sowie Kombinationen hieraus ausgestattet sein bzw. vorgenommen werden.

Es wird also auch im Rahmen des erfindungsgemäßen Verfahrens vorgeschlagen, dass bevorzugt ein bestimmter Zustand, etwa die Stellung eines Ventilkolbens, der Ventileinrichtung in einem ersten Behandlungszyklus abgefragt wird. Bevorzugt werden, besonders bevorzugt bei jeder Blasstation, Messungen der Zeiten von den elektrischen Schaltsignalen einer Schaltzustandsänderung der Ventileinrichtung bis zur (tatsächlichen) Betätigung eines Sensors, bevorzugt eines Näherungsschalters, durchgeführt werden. Bevorzugt werden in einem weiteren, besonders bevorzugt nächstfolgenden, Behandlungszyklus der Blasstation die gemessenen Zeiten als Vorhalt eingerechnet. Bevorzugt erfolgt dies, indem in diesem weiteren Behandlungszyklus der Schaltzeitpunkt (bevorzugt für die Abgabe der elektrischen Schaltsignale zur Ansteuerung) für die Ventileinrichtung derart gewählt wird, dass der Soll-Schaltzeitpunkt der Ventileinrichtung um den gemessenen Vorhalt aus dem vorhergehenden (ersten) Behandlungszyklus früher (oder später) gewählt wird.

In einer vorteilhaften Ausführungsform wird die Regelung über eine Änderung eines Schaltzeitpunktes der Ventileinrichtung vorgenommen bzw. erfolgt.

Weitere Vorteile und Ausführungsformen ergeben sich aus den beigefügten Zeichnungen: Darin zeigen:
- Fig. 1: eine schematische Darstellung einer erfindungsgemäßen Vorrichtung;
- Fig. 2: eine perspektivische Darstellung eines Ventilblocks;
- Fig. 3: einen Querschnitt durch einen Ventilblock; und
- Fig. 4: eine Gegenüberstellung der erfindungsgemäßen Regelung der Ansteuerung einer Ventileinrichtung im Vergleich zum Stand der Technik.

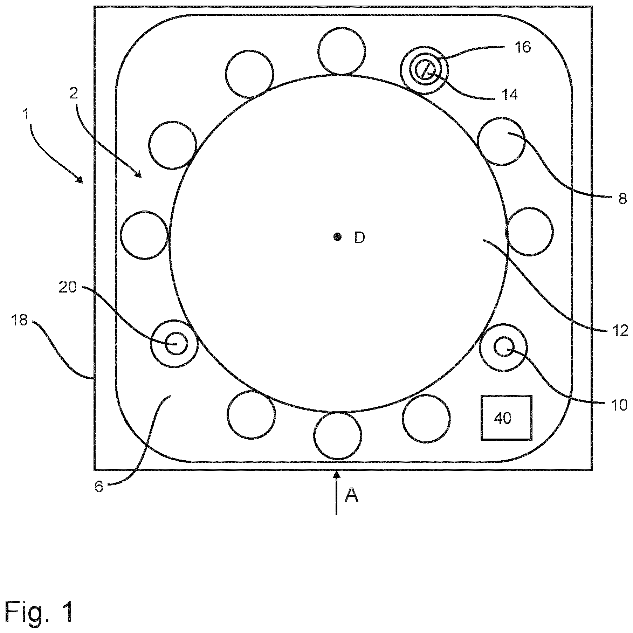

Fig. 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Umformungsstationen bzw. Blasstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder von der Vorrichtung 1 entnommen. Zu diesem Zwecke kann ein Zuführstern vorgesehen sein, der die Kunststoffvorformlinge der Vorrichtung 1 zuführt, sowie eine Abführeinrichtung, insbesondere ebenfalls ein Transportstern, der die fertigexpandierten Behältnisse 20 von der Vorrichtung 1 abführt. Die Vorrichtung 1 weist einen Stationsträger 12 auf, an dem eine Vielzahl von Blasstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Blasstation weist dabei jeweils eine Blasformeinrichtung 14 auf. Diese Blasformeinrichtung 14 setzt sich bevorzugt aus zwei Seitenteilen und einem Bodenteil zusammen. Die Blasformeinrichtungen 14 sind dabei an Blasformträgern 16 angeordnet. Die Transporteinrichtung 2 transportiert dabei bevorzugt die einzelnen Blasstationen 8 entlang einer vollständigen Kreislinie. Das Bezugszeichen A kennzeichnet beispielsweise eine Anfangsposition, bei der etwa die Blasformeinrichtungen 14 geöffnet werden und ein Kunststoffvorformling 10 in die Blasstation 8 eingebracht wird. Dieser wird im Laufe der Drehung der Blasstation 8 um die Drehachse D zu einem Kunststoffbehältnis 20 umgeformt und als solches aus der Blasstation 8 wieder entfernt. Während aller zwischenliegenden Behandlungsschritte befindet sich vorteilhaft die Blasstation in Drehung. Nach Entfernen des Kunststoffbehältnisses 20 aus der Blasstation 8 erreicht diese wieder die Anfangsposition A und ein neuer Behandlungszyklus bzw. eine neue Runde der Blasstation 8 mit einem Expansionsvorgang eines neuen Kunststoffvorformlings beginnt.

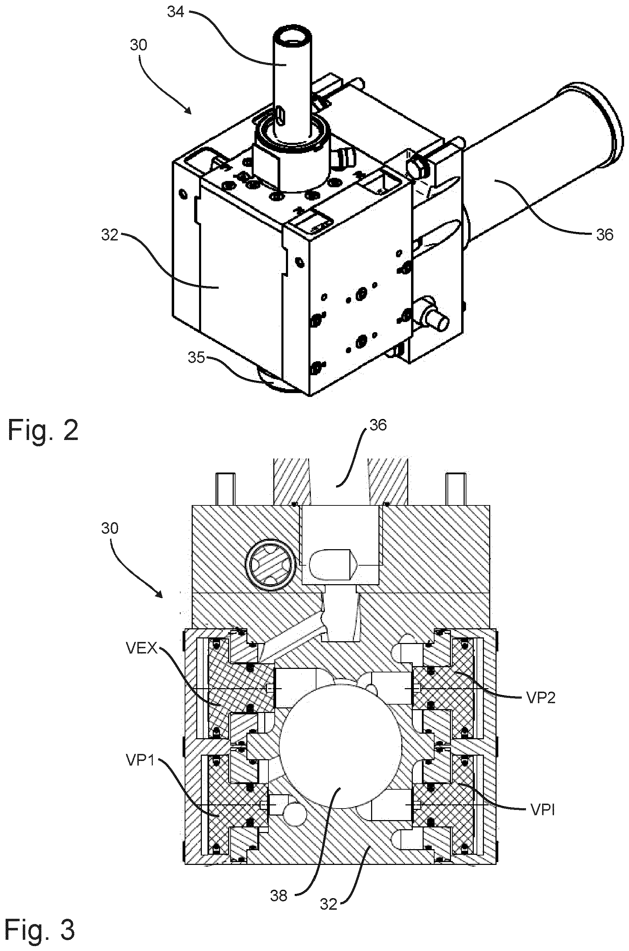

Fig. 2 zeigt eine perspektivische Darstellung eines Ventilblocks 32, welcher als Ventileinrichtung 30 zur Steuerung eines fließfähigen Mediums von einem Anschluss des Ventilblocks 32 zum Zuführen fließfähigen Mediums (etwa fließfähiges Medium) zu der Beaufschlagungseinrichtung 35. Die Beaufschlagungseinrichtung 35 ist üblicherweise als Blasdüse ausgebildet, welche auf die Mündung der in den Blasstationen 8 befindlichen Kunststoffvorformlinge 10 aufgesetzt wird und diese sodann mit fließfähigem Medium beaufschlagt werden. Der Ventilblock 32 umfasst dabei nicht nur (mindestens) eine Ventileinrichtung 30, die die Zufuhr des fließfähigen Mediums zur Beaufschlagungseinrichtung 35 steuert, sondern bevorzugt auch eine Ventileinrichtung 30, über die der Innenraum der (bevorzugt) fertig-expandierten Kunststoffbehältnisse 20 wieder (über die Beaufschlagungseinrichtung 35) entlastet werden kann und das fließfähige Medium wenigstens teilweise über einen Anschluss 36 des Ventilblocks abgeführt wird. Bevorzugt kann dieses sodann recycelt und wenigstens teilweise zu einem weiteren Expansionsvorgang verwendet werden. Der Ventilblock 32 weist weiterhin eine Einführöffnung, durch die hindurch eine Reckstange, bevorzugt inmitten der Beaufschlagungseinrichtung 35 durch, geführt werden kann, die eine Längsdehnung des Kunststoffvorformlings 10 durchführen kann, bevorzugt während dieser zusätzlich mit fließfähigen Medium beaufschlagt wird.

Fig. 3 zeigt einen Querschnitt durch einen Ventilblock 32. Zu sehen ist, dass der Ventilblock 30 vier Ventile VEX, VP1, VP2 und VPI aufweist. Jedes dieser Ventile VEX, VP1, VP2 und VPI kann eine Strömungsverbindung zu dem Leitungskanal 38 herstellen oder unterbrechen oder auch beeinflussen und damit den Fluidfluss (wenigstens zeitweise) durch den Ventilblock 32 steuern. Das Bezugszeichen 38 kennzeichnet einen Leitungskanal, durch den einerseits fließfähiges Medium zur Beaufschlagungseinrichtung 35 hin oder von dieser weg geführt werden kann und durch den andererseits eine Reckstange durch den Ventilblock 32 durch zu dem in der Blasstation 8 befindlichen Kunststoffvorformling 10 geführt werden und dieser entlang seiner Längsachse mittels der Reckstange gedehnt werden kann. Das Bezugszeichen VEX kennzeichnet ein sogenanntes Exhaust-Ventil bzw. Entlastungsventil, über welches die Blasstation 8 bzw. das darin befindliche fertig-geblasene Kunststoffbehältnis 20 zumindest teilweise druckentlastbar ist. Auch für dieses Entlastungsventil VEX kann eine Regelungseinrichtung vorgesehen sein, die insbesondere einen Schaltzeitpunkt der Ventileinrichtung 30 regelt. Bevorzugt ist wenigstens ein Anteil des fließfähigen Mediums von den Kunststoffbehältnissen 20 in wenigstens ein Druckreservoir über das Entlastungsventil VEX. Bevorzugt weist der Ventilblock ein Ventil VP1 auf, welches ein fließfähiges Medium zum Vorblasen des Kunststoffvorformlings mit einem ersten Druck P1 steuert. Weiter ist bevorzugt ein Ventil VPI vorgesehen, welches bevorzugt den Fluss fließfähigen Mediums, bevorzugt aus einem zweiten Druckreservoir, welches das fließfähige Medium mit einem Zwischendruck PI zur Verfügung stellt, zum Zwischenblasen des Kunststoffvorformlings mit diesem zweiten Druck PI steuert. Dabei ist bevorzugt der Zwischendruck PI höher als der erste Druck P1. Weiter ist bevorzugt ein drittes Ventil VP2 vorgesehen, welches die Beaufschlagung des Kunststoffvorformlings 10 mit fließfähigen Mediums eines dritten Drucks P2, der wiederum höher als der zweite Druck PI ist, zum Fertigblasen dieses Kunststoffvorformlings 10 steuert. Dieses pneumatische Medium des dritten Drucks P2 wird bevorzugt von einem dritten Druckreservoir zur Verfügung gestellt. Es können alle Ventile VEX, VP1, VPI und VP2 eine erfindungsgemäße Regelungseinrichtung aufweisen. Denkbar ist aber auch, dass wenigstens und bevorzugt lediglich für das Vorblasventil VP1 eine Regelungseinrichtung vorgesehen ist. Es hat sich nämlich gezeigt, dass insbesondere das Vorblasen einen großen Einfluss auf die Behältnisqualität hat, während der Zwischenblasdruck bevorzugt überwiegend dazu dient, den Luftverbrauch zu senken.

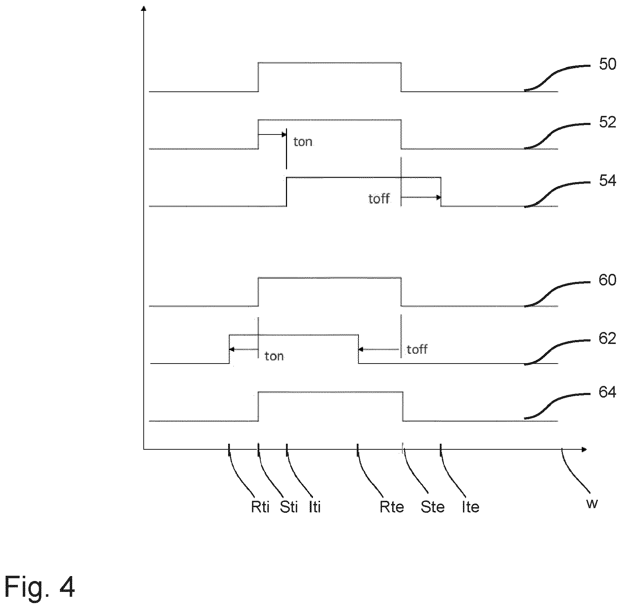

Fig. 4 zeigt eine Gegenüberstellung der erfindungsgemäßen Regelung der Ansteuerung einer Ventileinrichtung 32 im Vergleich zu einer bisherigen Ansteuerung der Ventileinrichtung 32 gemäß dem Stand der Technik.

Dargestellt ist durch die oberen drei Linien 50, 52 und 54 ein Verlauf eines Schaltzustandes einer Ventileinrichtung 30 bzw. eines Ventils in Abhängigkeit des Prozesswinkels w (bevorzugt etwa der Winkel, den eine gedachte geometrische Verbindungslinie zwischen der jeweiligen Blasstation 8 und der Drehachse D mit der gedachten geometrischen Verbindungslinie zwischen der Anfangsposition A und der Drehachse D einschließt) und entspricht damit einem zeitlichen Verlauf. Dabei veranschaulicht die Linie 50 einen erwünschten Schaltzustand der Ventileinrichtung 30, einem vorgegebenen Setup des Schaltzustands bzw. Steuerungszustands der Ventileinrichtung 30. Zu einem (Behandlungs-)Zeitpunkt bzw. Prozesswinkel Sti (dem Soll-Zeitpunkt-initial Sti), soll die Ventileinrichtung 30 geschalten werden, etwa von einem Öffnungszustand in einen Schließzustand oder aber auch von einem Schließzustand in einen Öffnungszustand. Entsprechend diesem erwünschten zeitlichen Verlauf 50 erfolgt dann auch eine entsprechende elektrische Ansteuerung der Ventileinrichtung 32, welche etwa durch die Linie 52 veranschaulicht sein kann. Über die elektrische Ansteuerung wird zunächst eine Vorsteuerungseinrichtung, etwa ein pneumatisch arbeitendes Pilotventil (Pneumatikventil), angesteuert. Der Verlauf eines derartigen Schaltzustands des Pilotventils kann etwa auch durch die Linie 52 veranschaulicht werden. Dabei zeigt es, dass es ebenfalls zum Zeitpunkt Sti von einem Zustand in einen anderen wechselt. Die drittoberste Linie 54 veranschaulicht (schematisch) einen tatsächlichen zeitlichen Verlauf der Stellung des Ventilkolbens der Ventileinrichtung 30. Zu sehen ist, dass diese nicht, wie erwünscht, dem erwünschten zeitlichen Verlauf 50 (des Setups) des Schaltzustands bzw. des Steuerungszustands der Ventileinrichtung 30 folgt, sondern bezüglich beider Schaltungen zu den Zeitpunkten Sti und Ste zeitverzögert verläuft. Mit anderen Worten tritt die Wirkung der Vornahme der Änderung eines Schaltzustandes zum Soll-Schaltzeitpunkt Sti, etwa initiiert durch elektrische Schaltsignale, nicht unmittelbar ein, indem sich im Wesentlichen unmittelbar die Stellung des Ventilkolbens entsprechend ändert, sondern erst zeitverzögert, nach einer gewissen Reaktionszeit bzw. Schaltzeit (in diesem Falle die zeitliche Differenz ton zwischen dem Ist-Schaltzeitpunkt Iti und dem Soll-Schaltzeitpunkt Sti). Entsprechendes gilt für die Wirkung der Vornahme der Änderung des Schaltzustandes zum Soll-Schaltzeitpunkt Ste, die ebenfalls nicht unmittelbar eintritt, sondern die Stellung des Ventilkolbens sich erst zeitverzögert (nach der Schaltzeit entsprechend der Zeitdifferenz aus Ite und Ste) zum Ist-Zeitpunkt Ite ändert. Bei Pneumatikventilen ist diese Schaltzeit allerdings nicht konstant bzw. gleichbleibend, sondern unterliegt einer gewissen Streuung. Daher basiert die erfindungsgemäße Vorrichtung bevorzugt auf der Idee, diese Schaltzeit bevorzugt in jeder Runde bzw. in jedem Behandlungszustand zu messen, und in dem nachfolgenden Behandlungszustand als Vorhalt miteinzurechnen.

Dies ist in den unteren drei Linien (schematisch) dargestellt. Als Schaltzeitpunkt der Ventileinrichtung 30 wird nicht mehr der Soll-Schaltzeitpunkt Sti gewählt, sondern ein um die gemessene Schaltzeit ton früherer Zeitpunkt Rti, was durch die Linie 62 veranschaulicht ist. Durch die Einrechnung der gemessenen Schaltzeit als Vorhalt wird erreicht, dass die hierdurch tatsächlich bewirkte Änderung der Stellung des Ventilkolbens der Ventileinrichtung 30, dargestellt durch die Linie 64, im Wesentlichen mit dem vorgegebenen "Setup", also der erwünschten bzw. vorgegebenen Stellung des Ventilkolbens, veranschaulicht durch die Linie 60, übereinstimmt bzw. zumindest eine zeitliche Zeitverzögerung deutlich kleiner ist. Entsprechendes gilt für den zweiten in der Fig. 4 dargestellten Schaltzeitpunkt Ste. Auch hier wird als Vorhalt die aus der vorhergehenden Runde bzw. aus dem vorhergehenden Behandlungszyklus gemessene Schaltzeit toff als Vorhalt eingerechnet (siehe Linie 62) und das elektrische Schaltsignal um diese gemessene Schaltzeit toff früher, nämlich zum Zeitpunkt Rte (entspricht bevorzugt dem Zeitpunkt Ste abzüglich toff), abgegeben. Hierdurch wird wiederum eine deutliche Annäherung der tatsächlichen Änderung der Stellung des Ventilkolbens (veranschaulicht durch die Linie 64) an das vorgegebene Setup 60 erzielt.

### Bezugszeichenliste

- 1: Vorrichtung
- 2: Transporteinrichtung
- 6: Basisträger
- 8: Blasstation
- 10: Kunststoffvorformling
- 14: Blasformeinrichtung
- 16: Blasformträger
- 18: Reinraum
- 20: Kunststoffbehältnis
- 30: Ventileinrichtung
- 32: Ventilblock
- 34: Einführöffnung für eine Reckstange
- 36: Anschluss zum Abführen fließfähigen Mediums
- 35: Beaufschlagungseinrichtung
- 38: Leitungskanal
- 40: Steuerungseinrichtung
- D: Drehachse
- A: Anfangsposition
- VEX: Exhaust-Ventil bzw. Entlastungsventil
- VP1, VP2, VPI: Ventile
- w: Prozesswinkel
- Rti, Sti, Iti,: Zustände
- Rte, Ste, Ite: Zustände

## Patentansprüche

1. Vorrichtung (1) zum Umformen von Kunststoffvorformlingen (10) zu Kunststoffbehältnissen (20) mit einer Vielzahl an Blasstationen (8), die jeweils Blasformeinrichtungen (14) aufweisen, welche einen Hohlraum ausbilden, innerhalb dem die Kunststoffvorformlinge (10) zu Kunststoffbehältnissen (20) umformbar sind, mit wenigstens einer Beaufschlagungseinrichtung (35), mittels der die Kunststoffvorformlinge (10) zu deren Expansion, mit einem fließfähigem Medium beaufschlagbar sind, und mit wenigstens einer Ventileinrichtung (30), welche zwischen wenigstens einem Druckreservoir und wenigstens einer Beaufschlagungseinrichtung (35) angeordnet ist und über welche die Zufuhr und/oder Abfuhr des unter hohem Druck stehenden, fließfähigen Mediums, dessen Blasdruck und/oder Volumenstrom, an die Beaufschlagungseinrichtung (35) beeinflussbar bzw. steuerbar ist,
wobei
die Vorrichtung (1) wenigstens eine Regelungseinrichtung (40) aufweist, welche dazu geeignet und bestimmt ist, einen Öffnungszustand und/oder einen Schließzustand der Ventileinrichtung (30), zu einem vorgegebenen Behandlungszeitpunkt der Kunststoffbehältnisse zu regeln und wobei die Regelungseinrichtung (40) wenigstens eine Sensoreinrichtung aufweist, welche wenigstens zeitweise wenigstens einen Messwert erfasst, der für eine zumindest mittelbar eine momentane von der Ventileinrichtung (30) bewirkte Steuerung der Zufuhr und/oder Abfuhr des fließfähigen Mediums charakteristisch ist, und die Regelungseinrichtung (40) eine Regelung in Abhängigkeit dieses erfassten Messwertes vornimmt/bewirkt, und
die Vorrichtung eine Zeitmesseinrichtung aufweist, welche wenigstens zeitweise einen Zeitpunkt erfasst, an dem der von der Sensoreinrichtung erfasste Messwert einen vorgegebenen Messwert erreicht und/oder überschreitet.

2. Vorrichtung (1) nach Anspruch 1,
**dadurch gekennzeichnet, dass**
sie wenigstens eine pneumatisch arbeitende Vorsteuerungseinrichtung aufweist, welche dazu geeignet und bestimmt ist, die Ventileinrichtung (30) anzusteuern, und die Regelungseinrichtung (40) bevorzugt ausschließlich mittels einer Ansteuerung der Vorsteuerungseinrichtung eine Regelung der Ventileinrichtung (30) realisiert/vornimmt.

3. Vorrichtung (1) nach dem vorangegangenen Anspruch,
**dadurch gekennzeichnet, dass**
die pneumatisch arbeitende Vorsteuerungseinrichtung dazu geeignet und bestimmt ist, zumindest mittelbar und bevorzugt unmittelbar die über die Ventileinrichtung (30) bewirkte Steuerung der Zufuhr und/oder Abfuhr des fließfähigen Mediums zu beeinflussen.

4. Vorrichtung (1) nach wenigstens einem der vorangegangen Ansprüche,
**dadurch gekennzeichnet, dass**
die Ventileinrichtung (30) wenigstens ein Ventil aufweist, welches einen in einem Zylinder geführten Ventilkolben aufweist, von dessen Position der Blasdruck und/oder der Volumenstrom des fließfähigen Mediums wenigstens zeitweise abhängt.

5. Vorrichtung (1) nach den beiden vorangegangenen Ansprüchen,
**dadurch gekennzeichnet, dass**
die Sensoreinrichtung wenigstens zeitweise die Position des Ventilkolbens innerhalb des Zylinders erfasst und die Regelungseinrichtung (40) die Regelung der Ventileinrichtung (30) in Abhängigkeit dieser Position vornimmt.

6. Vorrichtung (1) nach Anspruch 1,
**dadurch gekennzeichnet, dass**
die Sensoreinrichtung aus einer Gruppe ausgewählt ist, die Mikroschalter, induktive Näherungsschalter, andere elektronische oder elektromechanische Bauteile oder Kombinationen hieraus umfasst.

7. Vorrichtung (1) nach wenigstens einem der vorangegangenen Ansprüche,
**dadurch gekennzeichnet, dass**
die Zeitmesseinrichtung wenigstens zeitweise wenigstens einen Zeitpunkt, zu dem die Ventileinrichtung (30) einen vorgegebenen Zustand, insbesondere einen vorgegebenen Öffnungs- und/oder Schließzustand, erreicht, erfasst.

8. Vorrichtung (1) nach Anspruch 1 oder 7,
**dadurch gekennzeichnet, dass**
die Auswerteeinrichtung wenigstens den von der Zeitmesseinrichtung erfassten Zeitpunkt mit einem vorgegebenen Zeitpunkt vergleicht und in Abhängigkeit dieses Vergleichsergebnisses eine Änderung der Ansteuerung der Ventileinrichtung (30) und insbesondere eine Änderung der Ansteuerung der Vorsteuerungseinrichtung, bevorzugt eine Änderung des Schaltzeitpunktes der Ventileinrichtung (30) besonders bevorzugt in einem nachfolgenden Behandlungszyklus der Blasstation (8) vornimmt.

9. Vorrichtung (1) nach wenigstens einem der vorangegangenen Ansprüche,
**dadurch gekennzeichnet, dass**
sie mehr als eine Ventileinrichtung (30) und bevorzugt eine Vielzahl von Ventileinrichtungen (30) aufweist, mittels welchen die Druckzufuhr zu der Beaufschlagungseinrichtung (35) insbesondere unter verschiedenen Druckniveaus steuerbar ist, und jeder Ventileinrichtung (30) jeweils eine separate Regelungseinrichtung (40) zugeordnet ist.

10. Vorrichtung (1) nach wenigstens einem der vorangegangenen Ansprüche,
**dadurch gekennzeichnet, dass**
die Ventileinrichtung (30) wenigstens ein Entlastungsventil (VEX) aufweist, über welches die Blasstation (8) und bevorzugt dessen Blasformeinrichtung (14) zumindest teilweise druckentlastbar ist.

11. Vorrichtung (1) nach wenigstens einem der vorangegangenen Ansprüche,
**dadurch gekennzeichnet, dass**
die Auswerteeinrichtung dazu geeignet und bestimmt ist, zumindest zeitweise in Abhängigkeit des von der Sensoreinrichtung erfassten Messwertes und/oder des von der Zeitmesseinrichtung erfassten Zeitpunktes einen Alterungszustand wenigstens eines Ventils der Ventileinrichtung (30) zu ermitteln.

12. Verfahren zum Umformen von Kunststoffvorformlingen (10) zu Kunststoffbehältnissen (20) mit einer Vielzahl an Blasstationen (8), die jeweils Blasformeinrichtungen (14) aufweisen, welche einen Hohlraum ausbilden, innerhalb dem die Kunststoffvorformlinge (10) zu Kunststoffbehältnissen (20) umformbar sind, mit wenigstens einer Beaufschlagungseinrichtung (35), mittels der die Kunststoffvorformlinge zu deren Expansion, mit einem fließfähigen Medium beaufschlagbar sind, und mit wenigstens einer Ventileinrichtung (30), welche zwischen wenigstens einem Druckreservoir und wenigstens einer Beaufschlagungseinrichtung (35) angeordnet ist und welche die Zufuhr und/oder Abfuhr des unter hohem Druck stehenden, fließfähigen Mediums, dessen Blasdruck und/oder Volumenstrom, an die Beaufschlagungseinrichtung (35) beeinflussen bzw. steuern,
wobei
eine Regelung eines Öffnungszustandes und/oder einen Schließzustandes der Ventileinrichtung (30), zu einem vorgegebenen Behandlungszeitpunkt der Kunststoffbehältnisse vorgenommen wird/erfolgt und wobei die Regelungseinrichtung (40) wenigstens eine Sensoreinrichtung aufweist, welche wenigstens zeitweise wenigstens einen Messwert erfasst, der für eine zumindest mittelbar eine momentane von der Ventileinrichtung (30) bewirkte Steuerung der Zufuhr und/oder Abfuhr des fließfähigen Mediums charakteristisch ist, und die Regelungseinrichtung (40) eine Regelung in Abhängigkeit dieses erfassten Messwertes vornimmt/bewirkt, und
eine Zeitmesseinrichtung vorgesehen ist, welche wenigstens zeitweise einen Zeitpunkt erfasst, an dem der von der Sensoreinrichtung erfasste Messwert einen vorgegebenen Messwert erreicht und/oder überschreitet.

13. Verfahren nach dem vorangegangenen Anspruch,
**dadurch gekennzeichnet, dass**
die Regelung über eine Änderung eines Schaltzeitpunktes der Ventileinrichtung (30) vorgenommen wird/erfolgt.

## Claims

1. Device (1) for reshaping plastic parisons (10) into plastic containers (20), comprising a plurality of blow moulding stations (8) each having blow mould devices (14) which form a cavity, inside which the plastic parisons (10) can be reshaped into plastic containers (20), and comprising at least one application device (35) by means of which a flowable medium can be applied to the plastic parisons (10) for expansion thereof, and at least one valve device (30) which is arranged between at least one pressure reservoir and at least one application device (35) and by means of which the supply and/or removal of the flowable medium under high pressure the blowing pressure and/or volume flow thereof, to the application device (35) can be influenced or controlled,
wherein
the device (1) has at least one regulating device (40), which is suitable and intended to regulate an open state and/or a closed state of the valve device (30) at a predetermined time for treatment of the plastic containers and wherein the regulating device (40) has at least one sensor device which at least intermittently detects at least one measurement value which is at least indirectly characteristic for a current control effected by the valve device (30) for the supply and/or the removal of the flowable medium and the regulating device (40) performs/effects a regulation as a function of this detected measurement value, and
the device comprises a time measuring device, which at least intermittently detects a time at which the measurement value detected by the sensor device reaches and/or exceeds a predetermined measurement value.

2. Device (1) according to claim 1,
**characterized in that**
it has at least one pneumatically operating pilot control device, which is suitable and intended for controlling the valve device (30), and the regulating device (40) preferably implements/performs a regulation of the valve device (30) exclusively by means of control of the pilot control device.

3. Device (1) according to the preceding claim,
**characterized in that**
the pneumatically operating pilot control device is suitable and intended for, at least indirectly and preferably directly, influencing the control of the supply and/or removal of the flowable medium effected by means of the valve device (30).

4. Device (1) according to at least one of the preceding claims,
**characterized in that**
the valve device (30) has at least one valve which has a valve piston guided in a cylinder, and on the position of which the blowing pressure and/or the volumetric flow rate of the flowable medium depends at least temporarily.

5. Device (1) according to the two preceding claims,
**characterized in that**
the sensor device at least intermittently detects the position of the valve piston inside the cylinder and the regulating device (40) performs the regulation of the valve device (30) as a function of this position.

6. Device (1) according to claim 1,
**characterized in that**
the sensor device is selected from a group comprising microswitches, inductive proximity switches, other electronic or electromechanical components or combinations thereof.

7. Device (1) according to at least one of the preceding claims,
**characterized in that**
the time measuring device at least intermittently detects at least one time at which the valve device (30) reaches a predetermined state, in particular a predetermined open and/or closed state.

8. Device (1) according to claim 1 or 7,
**characterized in that**
the evaluation device compares at least the time measured by the time measuring device with a predetermined time and as a function of the result of this comparison it performs a change to the control of the valve device (30) and in particular a change to the control of the pilot control device, preferably a change to the switching time of the valve device (30) particularly preferably in a following treatment cycle of the blow moulding station (8).

9. Device (1) according to at least one of the preceding claims,
**characterized in that**
it has more than one valve device (30) and preferably a plurality of valve devices (30) by means of which the supply of pressure to the application device (35) is preferably controllable in particular at various pressure levels, and a separate regulating device (40) is associated with each valve device (30).

10. Device (1) according to at least one of the preceding claims,
**characterized in that**
the valve device (30) has at least one relief valve (VEX), by means of which the blow moulding station (8) and preferably the blow mould device (14) thereof can be at least partially relieved of pressure.

11. Device (1) according to at least one of the preceding claims,
**characterized in that**
the evaluation device is suitable and intended for determining an ageing state of at least one valve of the valve device (30) at least intermittently as a function of the measurement value detected by the sensor device and/or of the time detected by the time measuring device.

12. Method for reshaping plastic parisons (10) into plastic containers (20), comprising a plurality of blow moulding stations (8) each having blow mould devices (14) which form a cavity, inside which the plastic parisons (10) can be reshaped into plastic containers (20), and comprising at least one application device (35) by means of which a flowable medium can be applied to the plastic parisons for expansion thereof, and at least one valve device (30) which is arranged between at least one pressure reservoir and at least one application device (35) and which influence or control the supply and/or removal of the flowable medium under high pressure the blowing pressure and/or volume flow thereof, to the application device (35) can be influenced or controlled,
wherein
a regulation of an open state and/or a closed state of the valve device (30), is carried out or takes place at a predetermined time for treatment of the plastic containers and wherein the regulating device (40) has at least one sensor device which at least intermittently detects at least one measurement value which is at least indirectly characteristic for a current control effected by the valve device (30) for the supply and/or the removal of the flowable medium and the regulating device (40) performs/effects a regulation as a function of this detected measurement value, and
a time measuring device is provided, which at least intermittently detects a time at which the measurement value detected by the sensor device reaches and/or exceeds a predetermined measurement value.

13. Method according to the preceding claim,
**characterized in that**
the regulation is performed/takes place by means of a change to a switching time of the valve device (30).

## Revendications

1. Dispositif (1) pour le formage de préformes en matière plastique (10) en récipients en matière plastique (20) avec une pluralité de stations de soufflage (8) qui présentent respectivement des dispositifs de formage par soufflage (14) qui réalisent un espace creux, à l'intérieur duquel les préformes en matière plastique (10) peuvent être formées en récipients en matière plastique (20), avec au moins un dispositif d'alimentation (35), au moyen duquel les préformes en matière plastique (10) peuvent être alimentées en un milieu coulant pour leur expansion, et avec au moins un bloc de soupapes (30) qui est agencé entre au moins un réservoir de pression et au moins un dispositif d'alimentation (35) et par le biais duquel l'amenée et/ou l'évacuation du milieu coulant se trouvant sous haute pression, sa pression de soufflage et/ou débit volumique, peut être influencée ou commandée au niveau du dispositif d'alimentation (35),
dans lequel
le dispositif (1) présente au moins un dispositif de régulation (40) qui est conçu et destiné à réguler un état d'ouverture et/ou un état de fermeture du bloc de soupapes (30), à un moment de traitement prédéfini des récipients en matière plastique et dans lequel le dispositif de régulation (40) présente au moins un dispositif capteur qui détecte au moins temporairement au moins une valeur de mesure qui est caractéristique au moins indirectement pour une commande momentanée provoquée par le bloc de soupapes (30) de l'amenée et/ou l'évacuation du milieu coulant, et le dispositif de régulation (40) entreprend/provoque une régulation en fonction de cette valeur de mesure détectée, et
le dispositif présente un dispositif de mesure de temps qui détecte au moins temporairement un moment, auquel la valeur de mesure détectée par le dispositif capteur atteint et/ou dépasse une valeur de mesure prédéfinie.

2. Dispositif (1) selon la revendication 1,
**caractérisé en ce que**
il présente au moins un dispositif de précommande travaillant de manière pneumatique qui est conçu et destiné à commander le bloc de soupapes (30), et le dispositif de régulation (40) réalise/entreprend de préférence exclusivement au moyen d'une commande du dispositif de précommande une régulation du bloc de soupapes (30).

3. Dispositif (1) selon la revendication précédente,
**caractérisé en ce que**
le dispositif de précommande travaillant de manière pneumatique est conçu et destiné à influer au moins indirectement et de préférence directement sur la commande provoquée par le biais du bloc de soupapes (30) de l'amenée et/ou de l'évacuation du milieu coulant.

4. Dispositif (1) selon au moins l'une quelconque des revendications précédentes,
**caractérisé en ce que**
le bloc de soupapes (30) présente au moins une soupape qui présente un piston de soupape guidé dans un cylindre, de la position duquel dépend la pression de soufflage et/ou le débit volumique du milieu coulant au moins temporairement.

5. Dispositif (1) selon les deux revendications précédentes,
**caractérisé en ce que**
le dispositif capteur détecte au moins temporairement la position du piston de soupape à l'intérieur du cylindre et le dispositif de régulation (40) entreprend la régulation du bloc de soupapes (30) en fonction de cette position.

6. Dispositif (1) selon la revendication 1,
**caractérisé en ce que**
le dispositif capteur est sélectionné à partir d'un groupe qui comporte des microcommutateurs, des commutateurs de proximité inductifs, d'autres composants électroniques ou électromécaniques ou des combinaisons de ceux-ci.

7. Dispositif (1) selon au moins l'une quelconque des revendications précédentes,
**caractérisé en ce que**
le dispositif de mesure de temps détecte au moins temporairement au moins un moment, auquel le bloc de soupapes (30) atteint un état prédéfini, en particulier un état d'ouverture et/ou de fermeture prédéfini.

8. Dispositif (1) selon la revendication 1 ou 7,
**caractérisé en ce que**
le dispositif d'évaluation compare au moins le moment détecté par le dispositif de mesure de temps avec un moment prédéfini et en fonction de ce résultat de comparaison entreprend une modification de la commande du bloc de soupapes (30) et en particulier une modification de la commande du dispositif de précommande, de préférence une modification du moment de commutation du bloc de soupapes (30) particulièrement de préférence dans un cycle de traitement suivant de la station de soufflage (8).

9. Dispositif (1) selon au moins l'une quelconque des revendications précédentes,
**caractérisé en ce que**
il présente plus d'un bloc de soupapes (30) et de préférence une pluralité de blocs de soupapes (30), au moyen desquels l'amenée de pression au dispositif d'alimentation (35) peut être commandée en particulier sous différents niveaux de pression, et respectivement un dispositif de régulation (40) séparé est associé à chaque bloc de soupapes (30).

10. Dispositif (1) selon au moins l'une quelconque des revendications précédentes,
**caractérisé en ce que**
le bloc de soupapes (30) présente au moins une soupape de décharge (VEX), par le biais de laquelle la station de soufflage (8) et de préférence son dispositif de formage par soufflage (14) peut être déchargé au moins partiellement.

11. Dispositif (1) selon au moins l'une quelconque des revendications précédentes,
**caractérisé en ce que**
le dispositif d'évaluation est conçu et destiné à calculer au moins temporairement en fonction de la valeur de mesure détectée par le dispositif capteur et/ou du moment détecté par le dispositif de mesure de temps un état de vieillissement au moins d'une soupape du bloc de soupapes (30).

12. Procédé de formage de préformes en matière plastique (10) en récipients en matière plastique (20) avec une pluralité de stations de soufflage (8) qui présentent respectivement des dispositifs de formage par soufflage (14) qui réalisent un espace creux, à l'intérieur duquel les préformes en matière plastique (10) peuvent être formées en récipients en matière plastique (20), avec au moins un dispositif d'alimentation (35), au moyen duquel les préformes en matière plastique peuvent être alimentées en un milieu coulant pour leur expansion, et avec au moins un bloc de soupapes (30) qui est agencé entre au moins un réservoir de pression et au moins un dispositif d'alimentation (35) et qui influent ou commandent l'amenée et/ou l'évacuation du milieu coulant se trouvant sous haute pression, sa pression de soufflage et/ou débit volumique, au niveau du dispositif d'alimentation (35),
dans lequel
une régulation d'un état d'ouverture et/ou d'un état de fermeture du bloc de soupapes (30) est entreprise/est effectuée à un moment de traitement prédéfini des récipients en matière plastique et dans lequel le dispositif de régulation (40) présente au moins un dispositif capteur qui détecte au moins temporairement au moins une valeur de mesure qui est caractéristique au moins indirectement pour une commande momentanée provoquée par le bloc de soupapes (30) de l'amenée et/ou de l'évacuation du milieu coulant, et le dispositif de régulation (40) entreprend/provoque une régulation en fonction de cette valeur de mesure détectée, et
un dispositif de mesure de temps est prévu, lequel détecte au moins temporairement un moment, auquel la valeur de mesure détectée par le dispositif capteur atteint et/ou dépasse une valeur de mesure prédéfinie.

13. Procédé selon la revendication précédente,
**caractérisé en ce que**
la régulation est entreprise/est effectuée par le biais d'une modification d'un moment de commutation du bloc de soupapes (30).
